(19) Europäisches Patentamt
European Patent Office
Office européen des brevets

(11) **EP 0 529 320 B1**

(12) **EUROPÄISCHE PATENTSCHRIFT**

(45) Veröffentlichungstag und Bekanntmachung des Hinweises auf die Patenterteilung:
**19.06.1996 Patentblatt 1996/25**

(51) Int. Cl.$^6$: **B60G 25/00**

(21) Anmeldenummer: **92112760.1**

(22) Anmeldetag: **25.07.1992**

(54) **Hydropneumatisches Federungssystem für eine Fahrzeug-Liftachse**

Hydropneumatic spring system for a vehicle's lift axle

Système de ressort oléopneumatique pour l'essieu relevable d'un véhicule

(84) Benannte Vertragsstaaten:
**AT BE CH DE ES FR GB IT LI NL PT SE**

(30) Priorität: **22.08.1991 DE 4127801**

(43) Veröffentlichungstag der Anmeldung:
**03.03.1993 Patentblatt 1993/09**

(73) Patentinhaber: **HEMSCHEIDT FAHRWERKTECHNIK GmbH & Co.**
**D-42109 Wuppertal (DE)**

(72) Erfinder: **Runkel, Walter, Dr. Dipl.-Ing.**
**W-5600 Wuppertal 2 (DE)**

(74) Vertreter: **Patentanwälte**
**Dr. Solf & Zapf**
**Postfach 13 01 13**
**42028 Wuppertal (DE)**

(56) Entgegenhaltungen:
**EP-A- 0 425 885          DD-A-   286 713**
**DE-A- 2 020 292          DE-A- 3 330 368**
**DE-A- 3 934 385          DE-A- 3 936 034**
**DE-A- 4 008 831          DE-A- 4 014 441**
**DE-C- 3 902 743          DE-U- 9 103 359**
**FR-A- 2 621 536**

## Beschreibung

Die vorliegende Erfindung betrifft ein hydropneumatisches Federungssystem für eine einer Fahrzeug-Hauptachse zugeordnete, wahlweise anhebbare und absenkbare Liftachse, gemäß dem Oberbegriff des Anspruchs 1.

Es ist insbesondere bei Lastkraftwagen bekannt, einer Hauptachse, üblicherweise einer Antriebsachse, eine Liftachse zuzuordnen, um bei hohen Fahrzeuglasten durch Absenken der Liftachse eine Lastaufteilung auf die Hauptachse und die Liftachse vorzunehmen. Bei Leerlast kann die Liftachse angehoben werden. Bekannte Liftachsen können aber nachteiligerweise lediglich zwischen ihrer angehobenen Stellung und einer bestimmten, abgesenkten Stellung "umgeschaltet" werden, so daß die tatsächliche Lastverteilung auf die Hauptachse und die Liftachse sich in Abhängigkeit von den Federcharakteristiken von Haupt- und Liftachse und von der jeweiligen Last von selbst einstellt, ohne daß diese Lastverteilung beeinflußbar wäre. Diese unterschiedliche Lastverteilung wirkt sich auf die Haupt- bzw. Antriebsachse insofern nachteilig aus, als hierdurch die Antriebsräder aufgrund von unterschiedlicher Belastung (Radlast) auch eine unterschiedliche Traktionswirkung haben, was insbesondere bei nasser oder glatter Fahrbahn zu Problemen führen kann. Ferner ist auch die Federwirkung (Federungskomfort) von der Belastung abhängig, so daß auch die Fahr- bzw. Federungseigenschaften des Fahrzeugs nicht konstant sind.

Des weiteren sind hydropneumatische Federungssysteme bekannt; lediglich beispielsweise sei auf die Veröffentlichungen DE-OS 20 20 292, DE-OS 33 30 368, DE-PS 39 02 743, DE-OS 39 34 385 und DE-OS 39 36 034 sowie auf die ältere Patentanmeldung der Anmelderin P 40 08 831 und die europäische Patentanmeldung 90 119 816.9 (Veröffentlichungs-Nr. 0 425 885) verwiesen. Bei allen diesen Systemen werden bei Bewegungen einer zu federnden Masse, beispielsweise eines Fahrzeugrades oder einer Fahrzeugachse, ein Kolben und ein Zylinder eines Federzylinders (Federbein) relativ zueinander bewegt, wodurch ein hydraulisches Medium in Strömung versetzt wird, welches auf jeweils einen eine "Kompressionsfeder" bildenden Federspeicher wirkt. Beim Einfedern strömt ein bestimmtes Volumen des Hydraulikmediums in den jeweiligen Federspeicher, wodurch sich das Volumen des hierin enthaltenen kompressiblen Mediums verringert. Durch diese Kornprimierung wird ein Anstieg des Druckes und damit eine Federwirkung hervorgerufen, wobei dieser erhöhte Druck über das Hydraulikmedium wieder zum Ausfedern auf den Federzylinder wirkt. Die Vorzüge derartiger Systeme liegen insbesondere in einer guten und auf bestimmte Situationen anpaßbaren Federcharakteristik.

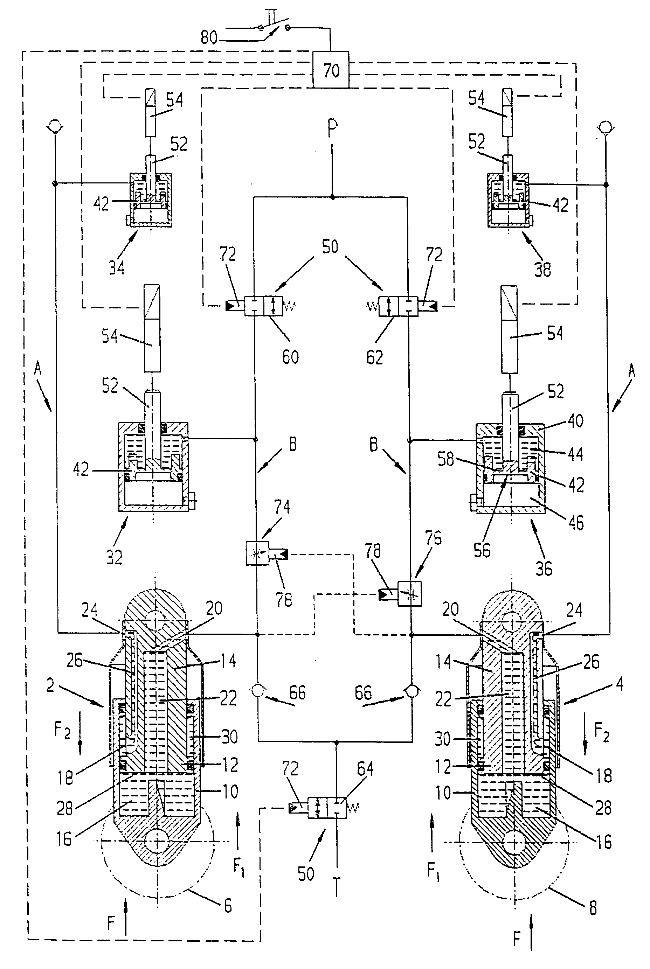

In der gattungsbildenden DE-U-91 03 359.4 der Anmelderin ist zudem ein hydropneumatisches Federungssystem unter anderem auch für eine Liftachse beschrieben (Fig. 6), wobei aber hier in der abgesenkten Stellung der Liftachse deren Federzylinder mit denjenigen der Haupt- bzw. Antriebsachse hydraulisch derart zusammengeschaltet sind, daß stets ein Druckausgleich erfolgt. Somit stellen sich auch hier in Abhängigkeit von der jeweiligen Gesamtlast unterschiedliche Belastungen der Hauptachse ein.

Der vorliegenden Erfindung liegt nun die Aufgabe zugrunde, ein hydropneumatisches Federungssystem für eine Liftachse zu schaffen, mit dem unter Ausnutzung der hydropneumatischen Federungseigenschaften über einen weiten Bereich unterschiedlicher Gesamtlasten die Hauptachse stets optimal belastet wird.

Erfindungsgemäß wird dies durch die Merkmale des Anspruchs 1 erreicht. Vorteilhafte Weiterbildungen der Erfindung sind in den abhängigen Unteransprüchen enthalten.

Erfindungsgemäß wird somit der hydraulische Druck innerhalb der Federzylinder der Liftachse derart in Abhängigkeit von einer - bei angehobener Liftachse - auf die Hauptachse wirckenden Gesamtlast eingestellt, daß die Federzylinder der Liftachse im abgesenkten Zustand einen Teil dieser Gesamtlast übernehmen, der einen bestimmten, für die Hauptachse optimalen Lastwert übersteigt. Dies bedeutet, daß erfindungsgemäß eine "gesteuerte Lastaufteilung" zwischen der Hauptachse und der Liftachse derart erfolgt, daß die Hauptachse unabhängig von der Höhe der Gesamtlast über einen weiten Lastbereich hinweg stets zumindest annähernd die gleiche, für ihre Traktions- und Federungseigenschaften optimale Last trägt. Der bezogen auf variable Gesamtlasten ebenfalls "variable Rest" der Gesamtlast wird dann von der Liftachse getragen, wobei diese "Restlast" durch Einstellung des hydraulischen Druckes innerhalb der Federzylinder eingestellt wird.

Vorzugsweise wird die auf die Hauptachse wirkende Gesamtlast von einer Steuerungseinrichtung automatisch anhand der lastabhängigen Einfederungsstellung der Hauptachse sowie anhand einer gespeicherten Federkennlinie der Hauptachse ermittelt, und aus dieser so ermittelten Last und dem ebenfalls gespeicherten, optimalen Lastwert für die Hauptachse werden der von der Liftachse zu übernehmende Teil der Last sowie auch der hierfür erforderliche, hydraulische Druck bestimmt. Dieser hydraulische Druck wird dann in den Federzylindern der Liftachse entsprechend eingestellt. Durch diese Maßnahmen kann die mit dem erfindungsgemäßen Federungssystem ausgestattete Liftachse im Zusammenhang mit beliebigen Hauptachsen eingesetzt werden, d.h. unabhängig von der Art des Federungssystems der Hauptachse, sei es ebenfalls ein hydropneumatisches Federungssystem oder aber ein konventionelles Federungssystem mit mechanischen Federn. Hierzu wird zudem vorteilhafterweise die lastabhängige Einfederungsstellung der Hauptachse mittelbar über die Liftachse ermittelt, indem die Liftachse aus ihrer angehobenen Lage heraus abgesenkt und eine Referenz-Hubstellung der Federzylinder der Liftachse ermittelt wird, in der der Liftachse zugeordnete Räder auf dem Boden auftreffen. Denn diese Referenz-Hubstellung ist abhängig von der vor dem Absenken der Liftachse vorhandenen, lastabhängigen Einfederung der Hauptachse. Die Referenz-Hubstellung der Federzylinder wird in einer bevorzugten Ausführungsform durch sensorische Erfassung eines bei Auftreffen der Räder auf den Boden auftretenden, sprunghaften Anstieges des hydraulischen Druckes der Federzylinder sowie durch sensorische Erfassung der zugehörigen Hubstellung der Federzylinder ermittelt. Die für die Erfindung erforderlichen Messungen werden demzufolge ausschließlich im Bereich der Liftachsen-Komponenten vorgenommen, wobei es lediglich erforderlich ist, die Federcharakteristik der Hauptachse in Form von Kennlinienwerten in der erfindungsgemäßen Steuerungseinrichtung abzuspeichern. Es läßt sich dann automatisch anhand der jeweiligen Referenz-Hubstellung die zugehörige Gesamtlast bestimmen. Aus dieser Gesamtlast wird dann in der oben beschriebenen Weise die von der Liftachse zu übernehmende Teillast errechnet.

Anhand der Zeichnung soll nun im folgenden die Erfindung beispielhaft näher erläutert werden. Dabei zeigt die einzige Zeichnungsfigur einen schematischen Schaltplan des erfindungsgemäßen Federungssystems, wobei die einzelnen Komponenten jeweils im vereinfachten Längsschnitt dargestellt sind.

Ein erfindungsgemäßes Federungssystem für eine Liftachse weist zwei hydraulische Federzylinder 2, 4 auf, die jeweils einem gestrichelt angedeuteten Rad 6, 8 der Liftachse zugeordnet sind. Jeder Federzylinder 2, 4 besteht aus einem Zylinder 10, in dem ein Kolben 12 axialbeweglich geführt ist. Der Kolben 12 ist mechanisch mit einer Kolbenstange 14 verbunden, die gegen den Zylinder 10 abgedichtet nach außen geführt ist. Vorzugsweise sind hierbei der Zylinder 10 mit dem Rad bzw. der Liftachse und die Kolbenstange 14 mit ihrem freien, nach außen geführten Ende mit einem Fahrzeugrahmen verbunden. Der Kolben 12 ist über eine Umfangsdichtung gegen die Innenwandung des Zylinders 10 abgedichtet und teilt hierdurch zwei gegensinnig volumenveränderliche Druckräume voneinander ab, nämlich einen der Kolbenstange 14 gegenüberliegenden Zylinderraum 16 und einen die Kolbenstange 14 umschließenden Ringraum 18. Jeder Federzylinder 2, 4 besitzt im nach außen geführten Endbereich der Kolbenstange 14 einerseits einen ersten Anschluß 20, der über einen axialen Kanal 22 der Kolbenstange 14 in den Zylinderraum 16 mündet, sowie andererseits einen zweiten Anschluß 24, der ebenfalls über einen axialen Kanal 26 der Kolbenstange 14 in den Ringraum 18 mündet.

Aufgrund der beschriebenen Ausgestaltung der hydraulischen Federzylinder 2, 4 besitzt jeweils der Kolben 12 zwei gegenüberliegende, mit hydraulischem Druck beaufschlagte Druckflächen, und zwar eine dem Zylinderraum 16 zugekehrte, grössere Druckfläche 28 sowie eine demgegenüber flächenmäßig kleinere, dem Ringraum 18 zugekehrte, ringförmige Druckfläche 30.

Die beiden Druckräume jedes Federzylinders 2, 4, d. h. der Zylinderraum 16 und der Ringraum 18, sind hydraulisch voneinander getrennt und mit jeweils einem separaten Federspeicher verbunden. Der Zylinderraum 16 des einen Federzylinders 2 ist über den ersten Anschluß 20 mit einem Federspeicher 32 verbunden, der Ringraum 18 dieses Federzylinders 2 über den zweiten Anschluß 24 mit einem Federspeicher 34, der Zylinderraum 16 des anderen Federzylinders 4 über seinen ersten Anschluß 20 mit einem Federspeicher 36 sowie der Ringraum 18 dieses Federzylinders 4 über den zweiten Anschluß 24 mit einem Federspeicher 38.

In dem bevorzugten Ausführungsbeispiel der Erfindung ist jeder dieser Federspeicher 32 bis 38 als Kolbenspeicher mit einem in einem Zylindergehäuse 40 schwimmend, d. h. frei beweglich, geführten Trennkolben 42 ausgebildet. Der Trennkolben 42 trennt innerhalb des Zylindergehäuses 40 einen hydraulisch mit dem jeweiligen Federzylinder 2 bzw. 4 verbundenen Speicherraum 44 von einer mit einem kompressiblen Medium gefüllten Federkammer 46. Dabei ergeben sich durch bestimmte pneumatische Vorspanndrücke der kompressiblen Medien in den Federkammern 46 hydraulische Drücke, die jeweils die Druckflächen 28, 30 des Kolbens 12 beaufschlagen. Hierdurch ergeben sich in jedem Federzylinder 2, 4 zwei gegensinnig auf den Kolben 12 wirkende, unterschiedlich große Kolbenkräfte $F_1$ und $F_2$ durch Beaufschlagung der Druckflächen 28, 30 mit dem jeweiligen hydraulischen Druck. Die gesamte Tragkraft der Federzylinder 2, 4 ergibt sich dann aus der Differenz dieser Kolbenkräfte $F = F_1 - F_2$. Durch Wahl der pneumatischen Vorspanndrücke kann somit erfindungsgemäß die Federcharakteristik der Federzylinder 2, 4 nahezu beliebig beeinflußt werden.

Jeder Ringraum 18 der beiden Federzylinder 2, 4 bildet zusammen mit seinem angeschlossenen Federspeicher 34, 38 einen geschlossenen, rein volumengesteuerten Hydraulik-Kreislauf A, wobei jeweils die Stellungen einerseits des Kolbens 12 des Federzylinders 2, 4 und andererseits des Trennkolbens 42 des Federspeichers 34, 38 einander proportional sind, so daß erfindungsgemäß die Hubstellung der Federzylinder 6, 8 anhand der Stellung des jeweiligen Trennkolbens 42 der volumengesteuerten Federspeicher 34, 38 ermittelt werden kann. Die Zylinderräume 16 der Federzylinder 2, 4 bilden demgegenüber zusammen mit dem jeweils angeschlossenen Federspeicher 32, 36 jeweils einen lastgesteuerten Hydraulik-Kreislauf B. Diese lastgesteuerten Kreisläufe B sind vorzugsweise über eine Ventil-Anordnung 50 wahlweise mit einer Druckleitung P oder einer Tankleitung T eines Hydrauliksystems verbindbar. Hierbei ist in den Kreisläufen B die Stellung der Trennkolben 42 der Federspeicher 32, 36 proportional zu dem jeweiligen lastabhängigen Druck, so daß erfindungsgemäß anhand der jeweiligen Stellung der Trennkolben 42 der lastabhängigen Federspeicher 32, 36 der lastabhängige Druck ermittelt werden kann.

Um nun die Stellung der Trennkolben 42 der Federspeicher 32 bis 38 feststellen zu können, ist jeder Trennkolben 42 zweckmäßigerweise mit einer aus dem Zylindergehäuse 40 abgedichtet nach außen geführten Trennkolbenstange 52 verbunden, und diese Trennkolbenstangen 52 wirken jeweils auf einen Weggeber 54, die zur Stellung der Trennkolbenstangen proportionale Signale erzeugen.

Die Trennkolbenstangen 52 erstrecken sich vorzugsweise durch den Speicherraum 44 hindurch, so daß jeder Federspeicher 32 bis 38 derart als Druckwandler ausgebildet ist, daß jeweils der pneumatische Druck innerhalb der Federkammer 46 kleiner als der hydraulische Druck innerhalb des Speicherraums 44 ist. Aufgrund der Trennkolbenstange 52 besitzt jeder Trennkolben 42 zwei unterschiedlich große Druckflächen, und zwar eine größere, der Federkammer 46 zugekehrte Kolbenfläche 56 und eine um den Querschnitt der Trennkolbenstange kleinere, dem Speicherraum 44 zugekehrte Ringfläche 58. Diese beschriebene Druckdifferenz zwischen dem pneumatischen und dem hydraulischen Druck ist insbesondere für die interne Abdichtung im Bereich des Trennkolbens 42 von Vorteil.

Die Ventil-Anordnung 50 besitzt in der bevorzugten Ausführungsform ein erstes Drucksteuerventil 60 in einer Verbindung zwischen dem lastgesteuerten Kreislauf B des einen Federzylinders 2 und der Druckleitung P, ein zweites Drucksteuerventil 62 in einer Verbindung zwischen dem lastgesteuerten Kreislauf B des anderen Federzylinders 4 und der Druckleitung P sowie vorzugsweise für beide Federzylinder 2, 4 ein gemeinsames Liftventil 64 in einer Verbindung zwischen den beiden lastgesteuerten Kreisläufen B und der Tankleitung T. Dabei ist zweckmäßigerweise das Liftventil 64 mit jedem der lastgesteuerten Kreisläufe B über ein Rückschlagventil 66 verbunden, wobei diese Rückschlagventile bei einer in Richtung der Tankleitung T gerichteten Strömung öffnen und eine umgekehrte Strömung sperren. Diese Maßnahme dient zur Entkoppelung der beiden Kreisläufe B, wodurch ein "hydraulischer Kurzschluß" vermieden wird.

Zur Steuerung des erfindungsgemäßen Federungssystems ist nun eine insbesondere elektronische Steuerungseinrichtung 70 vorgesehen, wobei die Weggeber 54 der Federspeicher 34 bis 38 zur Übermittlung ihrer Ausgangssignale mit Signaleingängen dieser Steuerungseinrichtung 70 verbunden sind. Desweiteren besitzen die Drucksteuerventile 60 und 62 und das Liftventil 64 der Ventil-Anordnung 50 jeweils elektrische bzw. elektromagnetische Betätigungselemente 72, die mit Steuerausgängen der Steuerungseinrichtung 70 verbunden sind.

In einer weiteren Ausgestaltung der Erfindung ist zwischen dem Zylinderraum 16 jedes Federzylinders 2, 4 und dem zugehörigen Federspeicher 32, 36 ein Dämpfungsventil 74, 76 angeordnet, wobei jedes Dämpfungsventil 74, 76 hinsichtlich seiner Dämpfungswirkung vorzugsweise lastabhängig einstellbar ist. Hierzu besitzt jedes Dämpfungsventil 74, 76 eine druckbeaufschlagbare Verstelleinrichtung 78, die vorzugsweise mit dem hydraulischen, lastabhängigen Druck des jeweils anderen, gegenüberliegenden Zylinderraums 16 beaufschlagt ist.

Im folgenden soll nun noch die Funktionsweise des erfindungsgemäßen Federungssystems näher erläutert werden.

1. Federung der abgesenkten Liftachse

Bei Einfederungsbewegungen der Federzylinder 2, 4 wird der Druck in den Federspeichern 32, 36 erhöht und in den anderen Federspeichern 34, 38 abgesenkt. Bei Ausfederungsbewegungen erfolgt eine umgekehrte Druckänderung. Durch die gegenläufig arbeitenden Federspeicher besitzt das erfindungsgemäße Federungssystem in praktisch allen Lastzuständen ein gleich gutes Federungsverhalten. Über die Dämpfungsventile 74, 76 wird die Einfederung wenig gedämpft, während die jeweilige Ausfederung stärker gedämpft wird. Dabei stellt sich die Dämpfung vorteilhafterweise jeweils automatisch ohne zusätzliche Sensoren auf die jeweilige Belastung ein. Aufgrund der Verbindung der Verstelleinrichtungen 78 der Dämpfungsventile 74, 76 mit dem jeweils gegenüberliegenden Zylinderraum 16 wird erfindungsgemäß eine Stabilisierung des mit der Liftachse ausgerüsteten Fahrzeuges erreicht. Bei Wankbewegungen des Fahrzeugs werden die Dämpfungsventile automatisch so geregelt, daß auf der Seite, die ausfedert, der Druck innerhalb des Zylinderraums 16 stark abgesenkt wird. Hierdurch wird die Tragkraft des ausfedernden Federzylinders sehr stark abgesenkt, so daß dieser Federzylinder die Wankbewegung des Fahrzeugs nicht mehr unterstützen kann. Die Höhe der Stabilisierung stellt sich vorteilhafterweise automatisch sowohl auf die Belastung als auch auf die jeweilige Wankgeschwindigkeit ein.

2. Anheben der Liftachse

Zum Anheben der Liftachse wird das Liftventil 64 in seine Durchflußstellung geschaltet. Hierdurch werden die Zylinderräume 16 der beiden Federzylinder 2, 4 mit der Tankleitung T verbunden, so daß der innerhalb der Ringräume 18 herrschende, von den Federspeichern 34, 38 erzeugte Druck die Federzylinder 2, 4 "zusammenzieht" und hierdurch Hydraulikmedium aus den Zylinderräumen 16 zur Tankleitung T strömt. Die Rückschlagventile 66 verhindern hierbei, daß ein hydraulischer Kurzschluß zwischen den Zylinderräumen 16 entsteht. Durch dieses Zusammenziehen der Federzylinder 2, 4 wird die Liftachse angehoben.

3. Absenken der Liftachse

Das Liftventil 64 wird in seine Sperrstellung geschaltet. Durch Schalten der Drucksteuerventile 60 und 62 wird Hydraulikmedium aus der Druckleitung P in die Zylinderräume 16 der Federzylinder 2, 4 geführt. Die Achse wird hierdurch gegen den Druck der Federspeicher 34, 38 abgesenkt. Sobald die Räder 6, 8 den Boden berühren, steigt die Belastung der Federzylinder 2, 4 an. Dies hat zur Folge, daß der Druck innerhalb der Zylinderräume 16 sowie innerhalb der mit diesen verbundenen Federspeichern 32, 36 ansteigt. Durch das Ansteigen des Druckes verändern sich die Hubstellungen der Trennkolben 42, wobei diese Stellungen über die Trennkolbenstangen 52 und die Weggeber 54 von der Steuerungseinrichtung 70 erfaßt wird. Gleichzeitig wird in diesem Moment auch die Stellung der Trennkolben 42 der volumengesteuerten Federspeicher 34 und 38 über die Trennkolbenstangen 52 und die Weggeber 54 von der Steuerungseinrichtung 70 erfaßt. Diese Stellungen sind ein Maß für die Hubstellung, d. h. die Referenz-Hubstellung, der Federzylinder 2, 4 im Zeitpunkt des Druckanstieges, d. h. des Auftreffens der Räder auf den Boden. Diese Referenz-Hubstellung gibt auch gleichzeitig an, um welchen Weg die Hauptachse lastbedingt eingefedert war. Anhand der in der Steuerungseinrichtung 70 gespeicherten Federkennlinie der Hauptachse kann aus dieser Stellung genau auf die Belastung geschlossen werden, so daß hieraus auch rechnerisch der Teil der Last ermittelt werden kann, der von den Federzylindern 2, 4 der Liftachse übernommen werden muß, damit die Last der Hauptachse stets konstant auf einem vorbestimmten, optimalen Wert gehalten wird. Die Steuerungseinrichtung 70 errechnet hieraus den hierfür erforderlichen hydraulischen Druck und steuert die Drucksteuerventile 60 und 62 so lange an, bis dieser erforderliche hydraulische Druck erreicht ist. Der Druck wird dabei wiederum über die Stellung der Trennkolben 42 der Federspeicher 32 und 36 ermittelt.

Der beschriebene Einstellvorgang, d. h. die erfindungsgemäße "gesteuerte Lastverteilung", wird zweckmäßigerweise von einer Bedienungsperson (Fahrer) z. B. durch Betätigung eines Startschalters 80 gestartet, und der Vorgang läuft dann - ausgehend von der angehobenen Stellung der Liftachse - automatisch wie beschrieben ab. Nach einer Laständerung mit abgesenkter Liftachse (Teilentladung/-zuladung) kann zudem auch das vorhergehende Anheben der Liftachse in den automatischen Ablauf einbezogen werden, so daß dann bei Betätigung des Startschalters 80 erst die Liftachse angehoben und dann erst wieder zum Einstellen der Lastverteilung (Ermittlung der aktuellen Gesamtlast über die neue Referenz-Hubstellung) abgesenkt wird. Desweiteren kann es zweckmäßig sein, den Einstellvorgang automatisch zu starten, wenn eine Änderung der Gesamtlast im statischen Zustand festgestellt wird.

Durch die vorliegende Erfindung ist es möglich, automatisch eine für die Hauptachse bzw. Antriebsachse optimale Belastung einzustellen. Hierdurch hat die Antriebsachse in Abhängigkeit von der Fahrzeugbelastung immer eine optimale Traktionswirkung. Ein weiterer Vorteil ist, daß auch das Fahrverhalten bzw. Federungsverhalten wesentlich verbessert wird. Die Belastung der Antriebsachse kann unabhängig von der Beladung des Fahrzeuges in weiten Grenzen zumindest annähernd konstant gehalten werden.

Die vorliegende Erfindung ist nicht auf das dargestellte und beschriebene Ausführungsbeispiel beschränkt, sondern umfaßt auch alle im Sinne der Erfindung gleichwirkenden Ausführungen. Insbesondere sei darauf hingewiesen, daß anstelle der Erfassung des Druckes sowie der Niveaustellung über die Trennkolben 42 der Federspeicher 32 bis 38 auch andere geeignete Drucksensoren bzw. Weggeber z. B. im Bereich der Federzylinder 2, 4 verwendet werden können.

**Patentansprüche**

1. Hydropneumatisches Federungssystem für eine einer Fahrzeug-Hauptachse zugeordnete Liftachse, mit mindestens zwei Federzylindern (2, 4), die über ein Hydraulikmedium gegen jeweils mindestens einen hydropneumatischen, ein kompressibles Medium enthaltenden Federspeicher (32; 36) wirken, wobei jeweils gegenüberliegende Druckflächen (28,30) von Kolben (12) der Federzylinder (2,4) derart mit hydraulischem Druck beaufschlagbar sind, daß die Liftachse wahlweise anhebbar und absenkbar ist,
dadurch gekennzeichnet, daß im abgesenkten Zustand der Liftachse der hydraulische Druck innerhalb der Federzylinder (2,4) mittels der der Liftachse zugeordneten Federspeicher (32;36) in Abhängigkeit von der Höhe einer auf die Hauptachse wirkenden Gesamtlast einstellbar ist, so daß die Federzylinder (2,4) der Liftachse im abgesenkten Zustand einen solchen Teil dieser Gesamtlast übernehmen, der einen bestimmten, für die Hauptachse optimalen Lastwert übersteigt und eine gesteuerte Lastaufteilung zwischen Haupt- und Liftachse erfolgt.

2. Federungssystem nach Anspruch 1,
dadurch gekennzeichnet, daß die auf die Hauptachse wirkende Gesamtlast von einer Steuerungseinrichtung (70) automatisch anhand der lastabhängigen Einfederungsstellung der Hauptachse sowie anhand einer gespeicherten Federkennlinie der Hauptachse ermittelt wird, und daß aus dieser so ermittelten Gesamtlast und dem gespeicherten, optimalen Lastwert der Hauptachse der von der Liftachse zu übernehmende Teil der Gesamtlast sowie der hierfür erforderliche, hydraulische Druck bestimmt werden und dieser hydraulische Druck in den Federzylindern (2, 4) eingestellt wird.

3. Federungssystem nach Anspruch 2,
dadurch gekennzeichnet, daß die lastabhängige Einfederungsstellung der Hauptachse mittelbar über die Liftachse ermittelt wird, indem die Liftachse aus ihrer angehobenen Lage abgesenkt und eine Referenz-Hubstellung der Federzylinder (2, 4) der Liftachse ermittelt wird, in der der Liftachse zugeordnete Räder auf dem Boden auftreffen.

4. Federungssystem nach Anspruch 3,
dadurch gekennzeichnet, daß die Referenz-Hubstellung der Federzylinder (2, 4) durch sensorische Erfassung eines bei Auftreffen der Räder auf dem Boden auftretenden Anstieges des hydraulischen Druckes der Federzylinder (2, 4) sowie durch sensorische Erfassung der zugehörigen Hubstellung der Federzylinder (2, 4) ermittelt wird.

5. Federungssystem nach einem oder mehreren der Ansprüche 1 bis 4,
**dadurch gekennzeichnet,** daß in jedem Federzylinder (2, 4) der Kolben (12) einen Zylinderraum (16) von einem eine Kolbenstange (14) umschließenden Ringraum (18) abteilt, wobei der Zylinderraum (16) und der Ringraum (18) hydraulisch voneinander getrennt und jeweils mit einem separaten Federspeicher (32, 34; 36, 38) verbunden sind.

6. Federungssystem nach Anspruch 5,
**dadurch gekennzeichnet,** daß jeweils der Ringraum (18) mit seinem verbundenen Federspeicher (34, 38) einen geschlossenen, volumengesteuerten Hydraulik-Kreislauf (A) und der Zylinderraum (16) mit seinem verbundenen Federspeicher (32, 36) einen über eine Ventil-Anordnung (50) wahlweise mit einer Druckleitung (P) oder einer Tankleitung (T) eines Hydrauliksystems verbindbaren, lastgesteuerten Hydraulik-Kreislauf (B) bilden.

7. Federungssystem nach einem oder mehreren der Ansprüche 1 bis 6,
**dadurch gekennzeichnet,** daß vorzugsweise jeder der Federspeicher (32 - 38) als Kolbenspeicher mit einem in einem Zylindergehäuse (40) schwimmend geführten Trennkolben (42) ausgebildet ist, wobei der Trennkolben (42) einen hydraulisch mit dem jeweiligen Federzylinder (2, 4) verbundenen Speicherraum (44) von einer mit dem kompressiblen Medium gefüllten Federkammer (46) trennt.

8. Federungssystem nach einem oder mehreren der Ansprüche 1 bis 7,
**dadurch gekennzeichnet,** daß vorzugsweise jeder der Federspeicher (32 - 38) derart als Druckwandler ausgebildet ist, daß jeweils der pneumatische Druck des kompressiblen Mediums kleiner als der hydraulische Druck ist.

9. Federungssystem nach Anspruch 7 oder 8,
**dadurch gekennzeichnet,** daß der Trennkolben (42) jedes Federspeichers (32 - 38) derart mit einer axial durch den Speicherraum (44) hindurch sowie abgedichtet aus dem Zylindergehäuse (40) nach außen geführten Trennkolbenstange (52) verbunden ist, daß der Trennkolben (42) zwei unterschiedlich große Druckflächen besitzt, und zwar eine größere, der Federkammer (46) zugekehrte Kolbenfläche (56) und eine kleinere, dem Speicherraum (44) zugekehrte Ringfläche (58).

10. Federungssystem nach einem oder mehreren der Ansprüche 4 bis 9,
**dadurch gekennzeichnet,** daß der hydraulische Druck innerhalb der Zylinderräume (16) der Federzylinder (2, 4) jeweils anhand der Stellung des Trennkolbens (42) des zugehörigen, lastgesteuerten Federspeichers (32, 36) bestimmt wird.

11. Federungssystem nach einem oder mehreren der Ansprüche 4 bis 10,
**dadurch gekennzeichnet,** daß die Hubstellung der Federzylinder (2, 4) jeweils anhand der Stellung des Trennkolbens (42) des mit dem Ringraum (18) verbundenen, volumengesteuerten Federspeichers (34. 38) bestimmt wird.

12. Federungssystem nach einem oder mehreren der Ansprüche 9 bis 11,
**dadurch gekennzeichnet,** daß die Trennkolbenstange (52) vorzugsweise jedes der Federspeicher (32 - 38) mit einem Weggeber (54) verbunden ist.

13. Federungssystem nach einem oder mehreren der Ansprüche 2 bis 12,
**dadurch gekennzeichnet,** daß die Weggeber (54) und vorzugsweise Betätigungselemente (72) der Ventil-Anordnung (50) mit Signaleingängen bzw. Steuerausgängen der Steuerungseinrichtung (70) verbunden sind.

14. Federungssystem nach einem oder mehreren der Ansprüche 6 bis 13,
**dadurch gekennzeichnet,** daß die Ventil-Anordnung (50) ein erstes Drucksteuerventil (60) in einer Verbindung zwischen dem lastgesteuerten Kreislauf (B) des einen Federzylinders (2) und der Druckleitung (P), ein zweites Drucksteuerventil (62) in einer Verbindung zwischen dem lastgesteuerten Kreislauf (B) des anderen Federzylinders (4) und der Druckleitung (P) sowie vorzugsweise für beide Federzylinder (2, 4) ein gemeinsames Liftventil (64) in einer Verbindung zwischen den beiden lastgesteuerten Kreisläufen (B) und der Tankleitung (T) aufweist.

15. Federungssystem nach Anspruch 14,
**dadurch gekennzeichnet,** daß das Liftventil (64) mit jedem der lastgesteuerten Kreisläufe (B) über ein für eine in Richtung der Tankleitung (T) gerichtete Strömung öffnendes und eine umgekehrte Strömung sperrendes Rückschlagventil (66) verbunden ist.

16. Federungssystem nach einem oder mehreren der Ansprüche 5 bis 15,
**dadurch gekennzeichnet,** daß zwischen dem Zylinderraum (16) jedes Federzylinders (2, 4) und dem zugehörigen Federspeicher (32, 36) ein Dämpfungsventil (74, 76) angeordnet ist, wobei jedes Dämpfungsventil (74. 76) hinsichtlich seiner Dämpfungswirkung vorzugsweise lastabhängig einstellbar ist.

17. Federungssystem nach Anspruch 16, **dadurch gekennzeichnet,** daß jedes Dämpfungsventil (74, 76) zum Einstellen seiner Dämpfungswirkung eine druckbeaufschlagbare Verstelleinrichtung (78) aufweist, die vorzugsweise mit dem hydraulischen, lastabhängigen Druck des jeweils anderen, gegenüberliegenden Zylinderraums (16) beaufschlagt ist.

**Claims**

1. Hydropneumatic suspension system for a lift axle assigned to a main axle of a vehicle, having at least two spring cylinders (2, 4) which act via a hydraulic medium against in each case at least one hydropneumatic spring accumulator (32; 36) containing a compressible medium, in each case opposite pressure areas (28, 30) of pistons (12) of the spring cylinders (2, 4) being subjectable to hydraulic pressure in such a way that the lift axle is selectively liftable and lowerable, characterised in that in the lowered state of the lift axle the hydraulic pressure within the spring cylinders (2, 4) can be set by means of the spring accumulators (32; 36) assigned to the lift axle, in dependence on the size of a total load acting on the main axle, so that the spring cylinders (2, 4) of the lift axle in the lowered state take over a part of this total load which exceeds a specific load value optimal for the main axle, and a controlled load distribution between main axle and lift axle results.

2. Suspension system according to Claim 1, characterised in that the total load acting on the main axle is determined automatically by a control device (70) from the load-dependent deflection position of the main axle and from a stored spring characteristic of the main axle, and in that this total load thus determined and the stored, optimal load value of the main axle are used to determine the part of the total load to be taken over by the lift axle and the hydraulic pressure required for this, and this hydraulic pressure is set in the spring cylinders (2, 4).

3. Suspension system according to Claim 2, characterised in that the load-dependent deflection position of the main axle is determined indirectly via the lift axle in that the lift axle is lowered from its lifted position and a reference stroke position of the spring cylinders (2, 4) of the lift axle in which wheels assigned to the lift axle strike the ground is determined.

4. Suspension system according to Claim 3, characterised in that the reference stroke position of the spring cylinders (2, 4) is determined by detecting, with the aid of sensors, a rise in the hydraulic pressure of the spring cylinders (2, 4) which occurs when the wheels strike the ground and by detecting, with the aid of sensors, the associated stroke position of the spring cylinders (2, 4).

5. Suspension system according to one or more of Claims 1 to 4, characterised in that in each spring cylinder (2, 4) the piston (12) separates off a cylinder space (16) from an annular space (18) enclosing a piston rod (14), the cylinder space (16) and the annular space (18) being hydraulically separated from each other and in each case connected to a separate spring accumulator (32, 34; 36, 38).

6. Suspension system according to Claim 5, characterised in that in each case the annular space (18) forms with its connected spring accumulator (34, 38) a closed, volume-controlled hydraulic circuit (A) and the cylinder space (16) forms with its connected spring accumulator (32, 36) a load-controlled hydraulic circuit (B) which is selectively connectable via a valve arrangement (50) to a pressure line (P) or a tank line (T) of a hydraulic system.

7. Suspension system according to one or more of Claims 1 to 6, characterised in that preferably each of the spring accumulators (32 - 38) is designed as a piston-type accumulator having a separating piston (42) guided floatingly in a cylinder housing (40), the separating piston (42) separating a storage space (44), connected hydraulically to the respective spring cylinder (2, 4), from a spring chamber (46) filled with the compressible medium.

8. Suspension system according to one or more of Claims 1 to 7, characterised in that preferably each of the spring accumulators (32 - 38) is designed as a pressure transducer in such a way that the pneumatic pressure of the compressible medium is in each case smaller than the hydraulic pressure.

9. Suspension system according to Claim 7 or 8, characterised in that the separating piston (42) of each spring accumulator (32 - 38) is connected to a separating-piston rod (52), guided axially through the storage space (44) and out of the cylinder housing (40) in a sealed manner, in such a way that the separating piston (42) possesses two pressure areas of different size, to be precise a larger piston area (56) facing the spring chamber (46) and a smaller annular area (58) facing the storage space (44).

10. Suspension system according to one or more of Claims 4 to 9, characterised in that the hydraulic pressure within the cylinder spaces (16) of the spring cylinders (2, 4) is determined in each case from the position of the separating piston (42) of the associated, load-controlled spring accumulator (32, 36).

11. Suspension system according to one or more of Claims 4 to 10, characterised in that the stroke position of the spring cylinders (2, 4) is determined in each case from the position of the separating piston (42) of the volume-controlled spring accumulator (34, 38) connected to the annular space (18).

12. Suspension system according to one or more of Claims 9 to 11, characterised in that the separating-piston rod (52) preferably of each of the spring accumulators (32 - 38) is connected to a displacement sensor (54).

13. Suspension system according to one or more of Claims 2 to 12, characterised In that the displacement sensor (54) and preferably actuating elements (72) of the valve arrangement (50) are respectively connected to signal inputs and control outputs of the control device (70).

14. Suspension system according to one or more of Claims 6 to 13, characterised in that the valve arrangement (50) has a first pressure control valve (60) in a connection between the load-controlled circuit (B) of one spring cylinder (2) and the pressure line (P), a second pressure control valve (62) in a connection between the load-controlled circuit (B) of the other spring cylinder (4) and the pressure line (P), and preferably for both spring cylinders (2, 4) a common lift valve (64) in a connection between the two load-controlled circuits (B) and the tank line (T).

15. Suspension system according to Claim 14, characterised in that the lift valve (64) is connected to each of the load-controlled circuits (B) via a non-return valve (66) which opens for a flow directed towards the tank line (T) and blocks a flow in the opposite direction.

16. Suspension system according to one or more of Claims 5 to 15, characterised in that a damping valve (74, 76) is arranged between the cylinder space (16) of each spring cylinder (2, 4) and the associated spring accumulator (32, 36), it being possible to set each damping valve (74, 76) with regard to its damping action preferably load-dependently.

17. Suspension system according to Claim 16, characterised in that each damping valve (74, 76), for the setting of its damping action, has a pressurisable adjusting device (78) which is preferably subjected to the hydraulic, load-dependent pressure respectively of the other, opposite cylinder space (16).

## Revendications

1. Système à ressort hydropneumatique pour essieu de soulèvement associé à l'essieu principal d'un véhicule, comportant au moins deux cylindres-ressort (2, 4) qui, grâce à un agent hydraulique, agissent à l'encontre d'au moins un ressort accumulateur hydropneumatique (32, 36) qui contient un agent compressible, les faces d'appui (28, 30) respectivement en regard de pistons (12) des cylindres-ressort (2, 4) pouvant être soumises à une pression hydraulique telle que l'essieu de soulèvement puisse être soulevé et abaissé sélectivement, caractérisé en ce que, lorsque l'essieu de soulèvement est abaissé, la pression hydraulique à l'intérieur des cylindres-ressort (2, 4) peut être réglée, au moyen des ressorts accumulateurs associés à l'essieu de soulèvement (32, 36), en fonction de l'importance de la charge totale agissant sur l'essieu principal, de manière à ce que les cylindres-ressort (2, 4) de l'essieu de soulèvement abaissé se chargent de la partie de la charge totale qui dépasse une valeur de charge déterminée optimale pour l'essieu principal, et qu'une répartition commandée de la charge entre l'essieu principal et l'essieu de soulèvement a lieu.

2. Système à ressort selon la revendication 1, caractérisé en ce que la charge totale agissant sur l'essieu principal est détectée automatiquement par un dispositif de commande (70), grâce à la compression en fonction de la charge de l'essieu principal, ainsi que grâce à une courbe d'élasticité mémorisée de l'essieu principal, et en ce qu'à partir de cette charge totale ainsi détectée et de la valeur de charge optimale mémorisée pour l'essieu principal, sont déterminées la partie de la charge totale que doit prendre en charge l'essieu de soulèvement, ainsi que la pression hydraulique nécessaire à cet effet, cette pression hydraulique étant réglée dans les cylindres-ressort (2, 4).

3. Système à ressort selon la revendication 2, caractérisé en ce que la compression en fonction de la charge de l'essieu principal est détectée indirectement au moyen de l'essieu de soulèvement, en abaissant l'essieu de soulèvement de sa position soulevée et en déterminant une position de levage de référence des cylindres-ressort (2, 4) de l'essieu de soulèvement dans laquelle des roues associées à l'essieu rencontrent le sol.

4. Système à ressort selon la revendication 3, caractérisé en ce que la position de levage de référence des cylindres-ressort (2, 4) est déterminée par la détection d'une augmentation de la pression hydraulique dans les cylindres-ressort (2, 4) se produisant lorsque les roues rencontrent le sol, ainsi que par la détection de la position de levage associée des cylindres-ressort (2, 4).

5. Système à ressort selon l'une ou plusieurs des revendications 1 à 4, caractérisé en ce que, dans chaque cylindre-ressort (2, 4), le piston (12) sépare une chambre de cylindre (16) d'une chambre annulaire (18) qui entoure la tige de piston (14), la chambre (16) et la chambre annulaire (18) étant séparées hydrauliquement entre elles et respectivement reliées à un ressort accumulateur distinct (32, 34 ; 36, 38).

6. Système à ressort selon la revendication 5, caractérisé en ce que la chambre annulaire (18) et son ressort accumulateur associé (34, 38) forment un circuit hydraulique fermé (A) à volume réglable, et que la chambre (16) et son ressort accumulateur associé (32, 36) forment un circuit hydraulique (B) actionné en fonction de la charge et pouvant être sélectivement relié, au moyen d'un agencement de vannes (50), à une conduite de pression (P) ou à une conduite (T) menant au réservoir d'un système hydraulique.

7. Système à ressort selon l'une ou plusieurs des revendications 1 à 6, caractérisé en ce que chaque ressort accumulateur (32 - 38) a de préférence la forme d'un ressort à piston comportant un piston séparateur (42) maintenu flottant à l'intérieur d'un boîtier de cylindre (40), le piston séparateur (42) séparant un espace d'accumulation (44) relié hydrauliquement au cylindre-ressort respectif (2, 4) d'une chambre de ressort (46) remplie d'un agent compressible.

8. Système à ressort selon l'une ou plusieurs des revendications 1 à 7, caractérisé en ce que chaque ressort accumulateur (32 - 38) a de préférence la forme d'un convertisseur de pression de manière à ce que la pression pneumatique de l'agent compressible soit respectivement inférieure à la pression hydraulique.

9. Système à ressort selon la revendication 7 ou 8, caractérisé en ce que le piston séparateur (42) de chaque ressort accumulateur (32 - 38) est relié à une tige (52) du piston séparateur guidée axialement à travers l'espace d'accumulation (44) et sortant de manière étanche du boîtier de cylindre (40) vers l'extérieur, de manière à ce que le piston séparateur (42) possède deux surfaces de pression de dimensions inégales, à savoir une surface de piston (56) plus grande faisant face à la chambre de ressort (46), et une surface annulaire (58) plus petite faisant face à l'espace d'accumulation (44).

10. Système à ressort selon l'une ou plusieurs des revendications 4 à 9,

caractérisé en ce que la pression hydraulique à l'intérieur des chambres (16) des cylindres-ressort (2, 4) est respectivement déterminée en fonction de la position du piston séparateur (42) du ressort accumulateur associé (32, 36) actionné en fonction de la charge.

11. Système à ressort selon l'une ou plusieurs des revendications 4 à 10, caractérisé en ce que la position de levage des cylindres-ressort (2, 4) est respectivement déterminée en fonction de la position du piston séparateur (42) du ressort accumulateur (34, 38) actionné en fonction de la charge et relié à l'espace annulaire (18).

12. Système à ressort selon l'une ou plusieurs des revendications 9 à 11, caractérisé en ce que la tige (52) du piston séparateur, de préférence de chacun des ressorts accumulateurs (32 - 38) est reliée à un indicateur de parcours (54).

13. Système à ressort selon l'une ou plusieurs des revendications 2 à 12, caractérisé en ce que l'indicateur de parcours (54) et de préférence des éléments d'actionnement (72) de l'agencement de vannes (50) sont reliés à des entrées de signaux ou sorties de commande du dispositif de commande (70).

14. Système à ressort selon l'une ou plusieurs des revendications 6 à 13, caractérisé en ce que l'agencement de vannes (50) comporte, dans une liaison entre le circuit actionné en fonction de la charge (B) de l'un des cylindres-ressort (2) et la conduite de pression (P), une première vanne de commande de la pression (60), et, dans une liaison entre le circuit actionné en fonction de la charge (B) de l'autre cylindre-ressort (4) et la conduite de pression (P), une deuxième vanne de commande de la pression (62), ainsi que, de préférence, une vanne de soulèvement (64) commune aux deux cylindres-ressort (2, 4) et agencée dans une liaison entre les deux circuits actionnés en fonction de la charge (B) et la conduite menant au réservoir (T).

15. Système à ressort selon la revendication 14, caractérisé en ce que la vanne de soulèvement (64) est reliée à chacun des circuits actionnés en fonction de la charge (B) par un clapet anti-retour (66) qui s'ouvre pour un flux dirigé vers la conduite menant au réservoir (T) et se ferme pour un flux circulant dans la direction inverse.

16. Système à ressort selon l'une ou plusieurs des revendications 5 à 15, caractérisé en ce que, entre l'espace de cylindre (16) de chaque cylindre-ressort (2, 4) et le ressort accumulateur associé (32, 36), il est prévu une soupape d'amortissement (74, 76), l'effet d'amortissement de chaque soupape (74, 76) pouvant être réglé en fonction de la charge.

17. Système à ressort selon la revenedication 16, caractérisé en ce que chaque soupape d'amortissement (74, 76) comporte, pour le réglage de son effet d'amortissement, un moyen de réglage (78) pouvant être soumis à une pression, de préférence, la pression hydraulique, fonction de la charge, de l'autre chambre de cylindre (16) respectivement située en regard.